Europäisches Patentamt

(19) **European Patent Office**

**Office européen des brevets**

(11) Publication number: **0 001 679**
**B2**

(12) # NEW EUROPEAN PATENT SPECIFICATION

(45) Date of publication of the new patent specification:
05.11.86

(21) Application number: **78300390.8**

(22) Date of filing: **14.09.78**

(51) Int. Cl.⁴: **C 08 J 3/12,** C 08 J 9/38,
B 29 B 9/02, D 21 H 3/48,
C 08 L 75/04

(54) Particulate polyurethane polymers in the form of micro-bits, a process for their preparation and aqueous slurries containing them.

(30) Priority: **15.09.77 US 833643**

(43) Date of publication of application:
**02.05.79 Bulletin 79/9**

(45) Publication of the grant of the patent:
**25.08.82 Bulletin 82/34**

(45) Mention of the opposition decision:
**05.11.86 Bulletin 86/45**

(84) Designated Contracting States:
**DE FR GB NL SE**

(56) References cited:
**DE-A-2 731 020**
**DE-B-2 132 996**
**DE-C-2 339 752**
**FR-A-2 065 482**
**GB-A-922 306**
**GB-A-1 058 932**
**GB-A-1 194 492**

**The file contains technical information submitted after the application was filed and not included in this specification**

(73) Proprietor: **Klein, Max, 257 Riveredge Road, Tinton Falls New Jersey 07724 (US)**

(72) Inventor: **Klein, Max, 257 Riveredge Road, Tinton Falls New Jersey 07724 (US)**

(74) Representative: **Holmes, Michael John, Frank B. Dehn & Co. Imperial House 15- 19 Kingsway, London WC2B 6UZ (GB)**

EP 0 001 679 B2

## Description

This invention relates to particulate polyurethane polymers which may be prepared by comminution of a flexible polyurethane foam. The particulate polymers in accordance with the invention are useful in the modification of paper products and in pollution control applications. Various attempts have been made to produce particulate synthetic polymers derived from expanded polymers or polymer solutions for use in the paper-making industry as modifiers to, improve or modify the properties of the fibrous paper products. These particulate synthetic polymer products of the prior art have met with limited commercial success either because of cost or incombatibility with standard paper-making processes and formulations. Generally, the use of a particulate polymer in a fibrous paper formulation has been found to result in decreased tensile and tear strength properties of the modified product.

One attempt to use a particulate synthetic polymer as a modifier in a paper product is described in U.S. Patent 3,038,867. A "semirigid" urea-formaldehyde foam is prepared and disintegrated. In order to process a mixture of this disintegrated aminoplast resin and wood pulp on paper-making equipment it was necessary to de-aerate the mixture. No physical properties on tensile or tear strength are required de-aeration step indicates that the disintegrated foam contained sufficient cell structure to entrap air and cause flotation of the disintegrated foam from the wood pulp component of the papermaking formulation which in turn caused the processing problem reported in Example 1 of the patent.

Another attempt to produce a particulate polymeric modifier is described in U.S. Patent 3,597,312. A particulate or fibrous polystyrene is prepared according to this patent by precipitating a solution of polystyrene in a non-solvent such as pentane. The resulting precipitate is recovered and extracted with non-solvent to remove entrapped solvent; the extraction step is then followed by drying of the polymer to remove the non-solvent. This process is costly and to some extent dangerous because it involves the use and recovery of large quantities of potentially explosive and relatively expensive organic solvents.

A further attempt to produce a particulate foamed urea-formaldehyde resin suitable for use in the paper-making field is described in U.S. Patent 3,164,559. At this point the art had come to recognize that granular particulate exhibited little or no mechanical binding attraction for the fibrous substance with which they were to be combined. The patent describes an attempt to use a flexible urea-formaldehyde resin as the starting material for making a paper additive. Grinding of flexible material is effected by compressing it under temperature and pressure until such densification eliminated the resilient property of the polymer which interfered with the grinding operation. The product of this process is deficient in that its addition to a paper-making formulation caused a major reduction in tensile and breaking strength.

British Patent Specification No. 922,306 discloses powdered foamed polyurethane which has been prepared by grinding. Although not specifically mentioned in this specification, it can be inferred that the powdered polyurethane is prepared from a rigid polyurethane foam starting material, and the described processing conditions would not be suitable for the preparation of a particulate product starting from flexible polyurethane foam.

British Patent Specification No. 1,058,932 describes the comminution of a polyurethane foam in the presence of water, and in particular this is performed in a hollander beater. Although not again specifically mentioned, it can be inferred that the starting polyurethane is a rigid foam as processing using a hollander could not provide a particulate product starting from a flexible polyurethane foam.

According to the present invention there is provided a particulate polymer which may with advantage be used in the modification of paper products and in pollution control applications. Particulate polymer in accordance with the invention is obtained from a flexible foamed substance and does not therefere have the attendant disadvantages associated with granular particulate material referred to above. Additionally, the degree of comminution of the flexible foamed substance necessary to yield particulate material in accordance with the invention is such that there is present insufficient cell structure to give rise to the entrapment of air. The disadvantages associated with particulate polymer described in U.S. Patent No. 3,038,867 are thereby avoided.

The invention provides particulate polyurethane polymer (referred to herein as polyurethane micro-bits). Such particulate polyurethane polymer may be obtained by comminution of flexible polyurethane foam in the presence of a cooling fluid inert to both the foam and the comminution equipment and from which resultant micro-bits can be separated.

Polyurethane micro-bits, when employed in formulations for use in the manufacture of paper, give rise to paper possessing enhanced tear and tensile strength as compared with either unmodified paper or with paper manufactured from formulations containing particulate polymer in accordance with the prior art discussed above.

According to one feature of the invention there is provided a particulate polymer prepared from a polyurethane foam an broken and interconnected strand portions from adjacent cells of the starting polyurethane foam, said strand portions being under magnification predominantly tripodal particles with generally uneven leg lengths and having hook-like projections and showing indentations and flutes, said uneven leg lengths and projections resulting from destruction of the cell windows of the starting polyurethane foam; which strand portions exhibit a substantial absence of intactcell windows; characterised in that said particular polymer is prepared from a flexible polyurethane foam and in that said tripoda particles range in size from 160 to 1 00 µm in the overall maximum dimension.

0 001 679

According to a further feature of the invention there is provided a process for preparing said particulate polymer as defined above which process comprises comminuting fragments of a flexible polyurethane foam in the presence of a sufficient amount of water to prevent the resulting mixture of the polyurethane foam and water from reaching a temperature which would adversely affect the properties of the polyurethane foam or the ultimately formed particulate polymer, and repeatedly impelling the resulting mixture of the comminuted polyurethane fragments in water through a circular path by repeated impact on them in the water by impact surfaces rotating about the axis of the circular path at from 4700 to 8000 revolutions per minute thereby driving the polyurethane fragments being comminuted against corner-shaped edges of a plurality of orifices arranged in screening array in an arcuate plane and being from substantially circular with a diameter of from 0.102 to 3.175 millimeters to substantially rectangular at from 0.254 to 3.175 millimeters in width by from 3.81 to 12.7 millimeters in length, thereby repeatedly providing said particulate polymer.

In order to assist in an understanding of the invention the accompanying drawings are provided. The invention is not limited to those embodiments of it shown in the drawings. In the drawings:

Figure 1 is an illustration of a section of several polyurethane cells depicting the strand and window portions of the cell.

Figure 2 is a SEM (scanning electron microscope) photograph at a magnification of 200 of the particulate products of this invention.

Figure 3 is a SEM of two particles of a product of this invention at a magnification of 200.

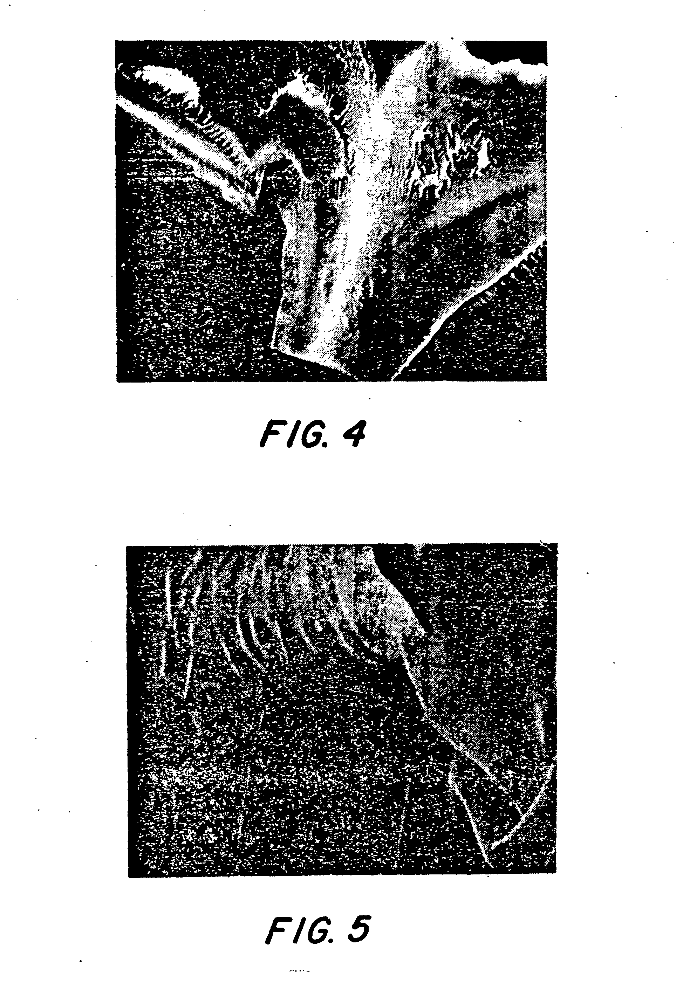

Figure 4 is a SEM of the particulate product shown in the center portion of Figure 3. The magnification is 500.

Figure 5 is a SEM at a magnification of 10,000 of the central left-hand portion of Figure 4 showing the fluted structure emanating from the strand portion of the particulate product and running vertically downwardly towards the remnant of the cell window portion of a product of this invention.

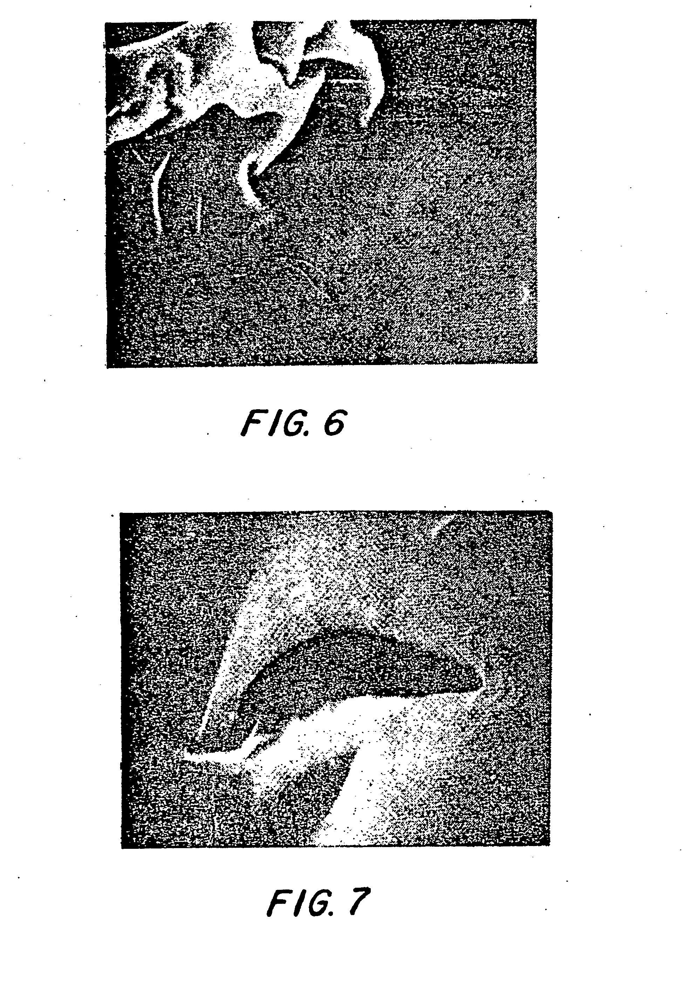

Figure 6 is a SEM at a magnification of 15,000 showing the end of the fluted structure of Figure 5 where it merges into the remnant of the cell window portion of a particulate product of this invention.

Figure 7 is a SEM at a magnification of 5,000 showing the thickness of the remnant of the cell window of a product of this invention.

The products of this invention are derived from flexible polyurethane foams. The preparation and properties of flexible polyurethane foams are well known and are based on the reaction of a di-isocyanate or other polyisocyanate with a polyol and usually water to release carbon dioxide as a blowing agent.

The preparation of flexible polyurethane foams and their properties are described in the "Handbook of Foamed Plastics", Bender, Rene J., Section X, pp. 173-236, Lake Publishing Corporation, Libertyville, Ill. (1 955); "The Development and Use of Polyurethane Foams", Doyle E.N., pp. 233-256, McGraw Hill Book Company (1971), and "Polyurethanes: Chemistry and Technology", Saunders and Frisch, Chapter VII, Part II, Inter-Science Publishers (1954).

Flexible polyurethane foams useful in the practice of this invention are further characterized by excellent recovery after 75% deflection (approximately less than 1% loss in height). The mechanical properties of flexible polyurethane foams are determined in accordance with ASTM D-1 564-54T.

The density of the flexible polyurethane foams useful in the practice of this invention should desirably not be greater than 0.1 grams per cubic centimeter; preferably in the range of from 0.05 grams per cubic centimeter to 0.017 grams per cubic centimeter.

Flexible polyurethane foams are soft, resilient materials and thus they are difficult to comminute to a size adapted for use in the paper industry. The novel structures of this invention are prepared by feeding shredded pieces of a flexible polyurethane foam into a confined comminuting zone while simultaneously introducing into said comminuting zone sufficient compatible, protective cooling fluid and beneficially water to prevent the temperature from reaching a level (for example 95°C) that would adversely affect the contents of the comminuting zone or the comminuting process and equipment. The temperature should be maintained below that which could degrade the polyurethane and above that which would freeze it, beneficially from about ambient temperature to below 149°C.

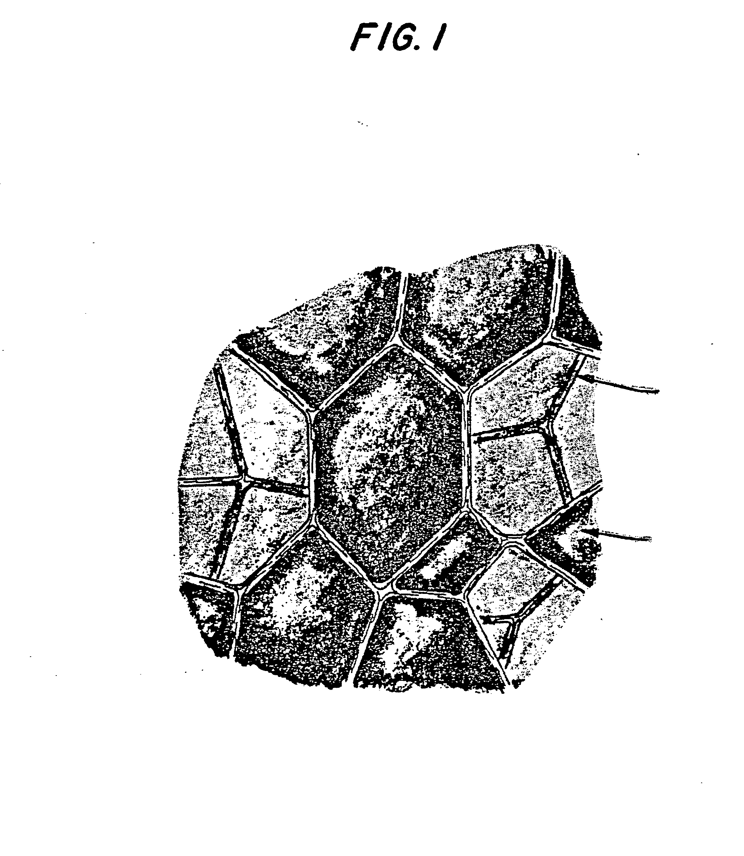

The structure of a flexible polymeric urethane foam may be generally described as an interconnected mass of bubbles which have been distorted into polyhedra form. The polymer is distributed between the walls of the bubbles and the lines where bubbles intersect, with most of the polymer at the intersections. For the purpose of this description the bubbles are called "cells", the lines of cell intersections are called "strands" and the walls between cells are called "windows". Figure 1 illustrates the structure of a flexible polyurethane foam and its component parts as defined hereabove.

Comminution of a flexible polyurethane in accordance with the process of this invention produces a novel structure which consists of one or more strand portions to which are attached fragments of the windows. The fragments of the windows produce a series of jagged hook-like projections and indentations on the strand portions. Examination of the drawings shows fluted areas which are believed to have been caused by tearing of the polymeric structure. For the purpose of this description, this broken cell structure is termed a "polyurethane micro-bit".

The products of this invention are superior to the particulate synthetic polymers of the prior art because the broken portions of the cell windows provide a series of hook-like projections, indentations and flutes which serve to provide attachment points for the fibers of a paper and thus anchor the polyurethane microbit into the matrix of the paper's intertwined cellulosic fibers.

The polyurethane micro-bits of the invention are prepared by feeding fragments of pieces shredded from flexible polyurethane foam and water into a confined comminuting zone, having a feed inlet to it, repeatedly impelling the resulting mixture of the starting pieces of polyurethane in the water through a circular path by repeated impact on them in the protective fluid (exemplified herein as water) by a plurality of impact surfaces spaced apart from one another and rotated around the axis of said circular path at from 4,700 to 8,000 revolutions per minute, and at the same time by said impact surfaces driving said pieces to and against corner-shaped edges of a dispersed plurality of from substantially circular orifices (a) having a diameter of from 0.102 to 3.175 millimeters (i.e. mm.) to substantially rectangular orifices from 0.254 to 3.175 mm. in width by from 3.81 to 12.7 mm. in length, and (b) being arranged in screening array in an arcuate plane spaced radially out of range of said impact surfaces to an extent that need be only sufficient to avoid collision between said orifices and said impact surfaces, as from about 0.508 to 1.016 mm., and thereby repeatedly tearing, ripping and shearing polyurethane micro-bits from the pieces of flexible polyurethane; said fed-in water being so proportioned to said fed-in pieces of flexible polyurethane foam to prevent the content of the comminuting zone from reaching a temperature that would adversely affect the integrity of said starting pieces and/or the desired micro-bits.

The preparation of these polyurethane microbits, and so also the method of the invention, can be conducted by disintegrating the flexible polyurethane foam in a comminuting machine (such as that produced by Fitzpatrick Company, of 832 Industrial Drive, Elmhurst, Illinois 60126, according to their Bulletin No. 152, copyright 1968) using the broached fixed blades (identified therein by "Code DS—225") to replace the blades or other comminuting elements, mounted for rotation in the comminuting chamber model DASO6, both shown on that Bulletin's page 5. That chamber is liquid-tightly capped, for example, by a cover such as shown in their Code M44D6 or Code MA44D6 (upper half of page 3 of their Bulletin 152).

The model DASO6 comminuting chamber is rectangular in horizontal cross-section and has a pair of opposed parallel, entirely vertical walls integrally joined at each of their opposite ends by a separate one of a pair of opposed vertically arcuate walls each with its convex face exposed to the exterior.

Sixteen identical, slat-shaped comminuting arms are separately removable but fixedly carried with their snugly adjacent to one another bases encircled about, and keyed to, the operating shaft and intermediate its free outer mounting ends. These arms extend radially out from the shaft (e.g. 127 mm. from its axis to the outer end of each arm) with the first of each consecutive four of them extending horizontally toward one arcuate wall, the second of each four extending vertically, the third four of them extending toward the other arcuate wall, and the fourth four of them extending vertically downward.

Each arm is rectangular in cross-section in a plane running through the entire length of the shaft's axis and of that arm, and of each arm 180° removed from it. The outer end of each arm meets at right angles with its two wider sides (25.4 mm. width) and its narrow or impact side (9.525 mm. wide) facing the direction of rotation. That narrow side also meets at right angles with the two wider sides which are parallel to one another for most of their width and with the trailing third of their surfaces tapering to one another and terminating in a knife edge of their trailing end.

Each free exposed end of the shaft extends through its respective stuffing box in its neighbouring one of the two parallel vertical walls on through a bearing carried on a respective trunnion affixed to the machine's foundation and spaced outwardly away from the respective wall. A driving pulley is mounted on each end of the shaft extending outwardly from its respective mounting trunnion.

The bottom of the comminuting chamber is an exchangeable dish-shaped, arcuate screen curved convexly downward with an inside radius (from the axis of the operating shaft) equal to the length of a comminuting arm plus 0.762 mm. clearance. The screen's overall rectangular peripheral opening has such dimensions and shape to enable it to be removably fitted in a liquid-tight engagement with the bottom of the four walls of the comminuting chamber.

The screen has staggered rows of, for example, circular holes varying in diameter as from 0.102 to 3.175 mm. and closely spaced to one another with sufficient between them for the screen to hold up under working conditions.

Except for its starting material feed hopper inlet at one side of it, the restof the chamber's cover is arcuate and convex upwardly with a radius (from the axis of the operating shaft) sufficient for the rotating arms to have a 0.762 mm. clearande from the inwardly facing surfaces of a plurality (e.g. three) pre-breaker bars (about 20.32 cm. long and 6.35 mm. wide) protruding for 3.175 mm. along their entire lenght into the interior of the comminuting chamber, and extending spaced apart from one another and parallel to the axis of the operating shaft.

The selected driving pulley on the operating shaft is connected by driving belts extending from a motor shaft drive pulley and can be operated at speeds embracing the range of from 4,700 to 8,000 r.p.m., and more effectively from about 5,000 to about 7,500 r.p.m.

The invention is illustated by but not restricted to the following example.

## Example 1

Approximately 400 litres of flexible polyurethane foam the form of pieces about 2.5 cm x 2.5 cm x 1.3 cm in size having a density of aproximately 0.03 grams per cubic centimeter were comminuted in a comminuting

0 001 679

machine (as destribed above) equipped with an input feeder approximately 10 cm in diameter by 7 1/2 cm long and having a bottom arcuate

### TABLE I

|  | Blank | 5% B* | 10% B | 40% B | 80% B |
|---|---|---|---|---|---|
| Tensile Strength. — kg/cm | 3.51 | 4.57 | 3.38 | 2.38 | 1.85 |
| Tear Strength — kg | 55.3 | 62.6 | 79.8 | 78.0 | 75.0 |
| Mullen kg/cm² | 3.22 | 2.45 | 3.36 | 2.7 | 2.38 |
| Brightness — % | 81.7 | 79.4 | 79.3 | 77.8 | 76.0 |
| Opacity — % | 90.1 | 87.2 | 88.7 | 90.3 | 91.3 |
| Basis Wt. — g/m² | 303 | 315 | 324 | 403 | 486 |
| Caliper — mm | 0.216 | 0.254 | 0.282 | 0.417 | 0.599 |

*B = Percentage of polyurethane micro-bits.

screen with rectangular slots 12.7 mm. long by 0.25 mm. wide and arranged in a herringbone array. The rotor was set to run at approximately 7,500 r.p.m. and the feeder set to charge the flexible polyurethane foam pieces at a rate of about 36 liters per every 5 minutes. The flexible polyurethane foam pieces to be introduced into the feeder were wetted with sufficient water to substantially cover their outer surface. Simultaneously, water was injected into the comminuting zone through 2.16 mm. diameter jet orifices at a rate of approximately 7.6 liters per minute. The mixture of polyurethane microbits leaving the bottom screen of the comminuting chamber was collected in open drums with bottom drain plugs, wherein the free water settled to the bottom and the polyurethane micro-bits with the bound water held by them in a proportion of 1 part of polyurethane micro-bits to 3 parts of water, due to trapped air, rose on top of the free water. The polyurethane micro-bits were recovered and dried in an oven at a temperature of approximately 99° C.

Hand sample paper sheets prepared by mixing the polyurethane micro-bits with a usual water suspension of bleached wood pulp in the usual test made in paper-making laboratories produced a product having significant improvements in tear and tensile strength over that of comparable sheets made with the bleached wood pulp alone in the same concentration of that of the pulp taken together with the polyurethane micro-bits. The properties of these papers are set forth below.

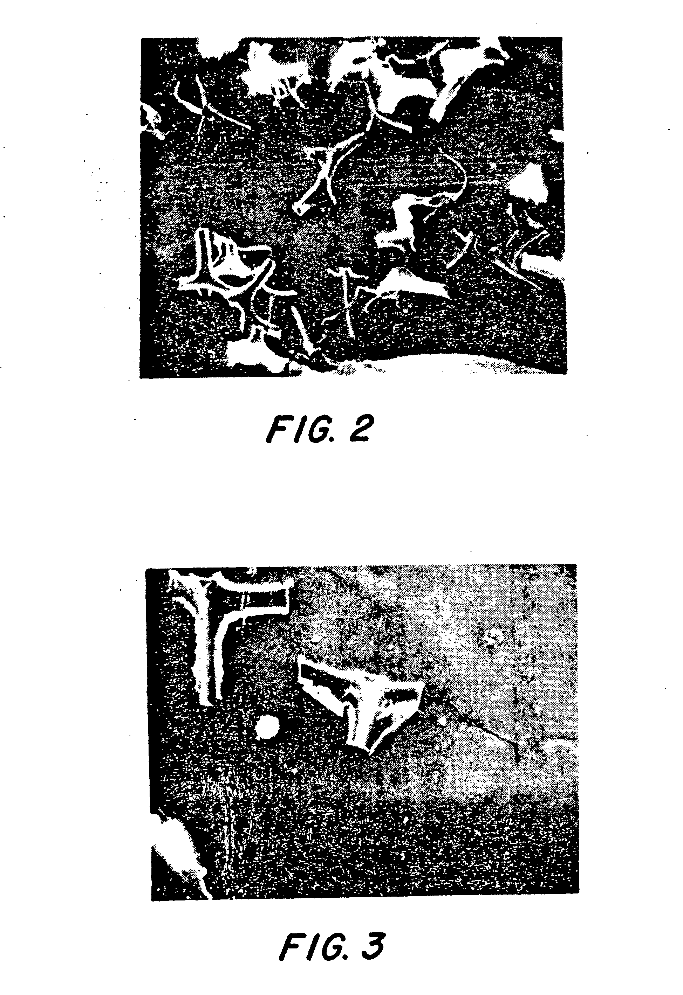

While water thus far is seen to be the more effective protective fluid to use, this example is to be considered as if written out in full herein, with the water replaced by any other protective compatible cooling fluid to maintain the contents in the comminuting zone at a temperature as herebefore described and from about ambient temperature to below 149°C. Figure 2 shows the overall structure of the polyurethane micro-bits of this invention. They range in size from about 160 to about 100 micron in the overall maximum dimension. They exhibit a relative similarity from micro-bit to micro-bit and the micro-bits may appear as triopodal particlaes with generally uneven length legs. The overall dimensions of the micro-bits can be controlled by changes in the polyurethane formulation made to effect the cell size.

Figure 3 shows the ragged peripheral boundaires of the polyurethane micro-bits which have resulted from the fracture and tearing of cell windows. These two mechanisms of cell window destruction are evidenced by the fluted tear line structure of the central microbit's right-hand boundary versus the jagged fracture line of the remaining boundaires. Modification of the mechanism of cell window destruction and the peripheral boundaires should be esily affected by changes in the polyurethane foam formulation.

The foregoing example illustates the industrial application of the polyurethane microbits as a midifier for use in paper an paper-like produits significant improvemetn in tensile and tear strength properties are obtained.

The polyurethane micro-bits of this invention when admixed in, or serving as a filter mefdium, are effective to remove phenol from aqueous solution, e.g. streams of industrial effluent, and also from gaseous streams.

### Claims

1. A particulate polymer prepared from a polyurethane foam and comprising broken and interconnected stand portions from adjacent cells of the starting polyurethane foam, said strand portions being under

5

magnification predominantly tripodal partiles with generally uneven leg lengths and having hook-like projections and showing indentations and flutes, said uneven leg lengths and projections resulting from destruction of the cell windows of the starting polyurethane foam; which strand portions exhibit a substantial absence of intact cell windows; characterized in that said particulate polymer is prepared from a flexible polyurethane foam and in that said tripodal particles range in size from 160 to 100 μm in the overall maximum dimension.

2. A particulate polymer according to claim 1 wherein the flexible polyurethane foam has a density of not greater than 0.1 grams per cubic centimeter.

3. A particulate polymer according to claim 2 wherein the flexible polyurethane foam has a density of from 0.017 to 0.05 grams per cubic centimeter.

4. An aqueous slurry which contains from 1.0 to 2.0 percent by weight of a particulate polymer according to any of claims 1-3.

5. A process for preparing particulate polymer as defined in claim 1 which process comprises comminuting fragments of a flexible polyurethane foam in the presence of a sufficient amount of water to prevent the resulting mixture of the polyurethane foam and water from reaching a temperature which would adversely affect the properties of the polyurethane foam or the ultimately formed particulate polymer, and repeatedly impelling the resulting mixture of the comminuted polyurethane fragments in water through a circular path by repeated impact on them in the water by impact surfaces rotating about the axis of the circular path at from 4700 to 8000 revolutions per minute thereby driving the polyurethane fragments being comminuted against corner-shaped edges of a plurality of orifices arranged in screening array in an arcuate plane and being from substantially circular with a diameter of from 0.102 to 3.175 millimeters to substantially rectangular at from 0.254 to 3.175 millimeters in width by from 3.81 to 12.7 millimeters in length, thereby repeatedly providing said particulate polymer.

6. A process according to claim 5 wherein said water is present in an amount sufficient to prevent the temperature of the mixture of foam and water from exceeding 95°C.

7. A process according to claim 5 wherein said water is replaced by an inert, compatible, protective cooling fluid from which the particulate polyurethane polymer can be separated and wherein said fluid is present in sufficient quantity to maintain the temperature of the mixture of foam and protective cooling fluid at below 149°C.

## Revendications

1. Polymère particulaire préparé à partir d'une mousse de polyuréthanne et comprenant des parties de cordons, cassées et interconnectées, provenant d'alvéoles adjacents de la mousse de polyuréthanne de départ, ces parties de cordons étant, sous agrandissement, essentiellement des particules à trois branches, ces trois branches ayant des longueurs généralement inégales, et possédant des saillies en forme de crochet et présentant des creux et des cannelures, ces branches de longueurs inégales et ces saillies provenant de la destruction des fenêtres des alvéoles de la mousse de polyuréthanne de départ, ces parties de cordons étant essentiellement exemptes de fenêtres d'alvéoles intacts, caractérié en ce que ledit polymère particulaire est préparé à partir d'une mousse de polyuréthanne flexible et en ce que la dimension maximale hors tout desdites particules à trois branches est comprise entre 160 et 100 μm.

2. Polymère particulaire selon la revendication 1, caractérisé en ce que la mousse de polyuréthanne flexible a une masse volumique non supérieure à 0,1 gramme par centimètre cube.

3. Polymère particulaire selon la revendication 2, caractérisé en ce que la mousse de polyuréthanne flexible a une masse volumique comprise entre 0,017 et 0,05 gramme par centimètre cube.

4. Suspension aqueuse, caractérisée en ce qu'elle contient de 1,0 à 2,0 pourcent en poids d'un polymère particulaire selon l'une quelconque des revendications 1 à 3.

5. Procédé de préparation d'un polymère particulaire selon la revendication 1, caractérisé en ce qu'il consiste à broyer des fragments d'une mousse de polyuréthanne flexible en présence d'une quantité d'eau suffisante pour empêcher que le mélange résultant de mousse de polyuréthanne et d'eau n'atteigneune température qui affecterait d'une manière défavorable les propriétés de la mousse de polyuréthanne ou le polymère particulaire finalement formé, et à forcer d'une manière répétée le mélange résultant des fragments de polyuréthanne broyés dans l'eau à passer par une trajectoire circulaire, en conséquence de chocs répétés exercés sur eux dans l'eau par des surfaces de choc tournant autour de l'axe de la trajectoire circulaire à une vitesse comprise entre 4700 et 8000 tours par minute, forçant ainsi les fragments de polyuréthanne broyés contre les arêtes, en forme de coin, d'un certain nombre d'orifices disposés selon un réseau de tamisage disposé dans un plan incurvé et dont la forme va d'une forme essentiellement circulaire, avec un diamètre compris entre 0,102 et 3,175 millimètres, à une forme essentiellement rectangulaire de largeur comprise entre 0,254 et 3,175 millimètres et de longueur comprise entre 3,81 et 12,7 millimètres, en donnant ainsi d'une manière répétée le polymère particulaire.

6. Procédé selon la revendication 5, caractérisé en ce que l'eau est présente en une quantité suffisante pour empêcher que la température du mélange de mousse et d'eau ne dépasse 95°C.

7. Procédé selon la revendication 5, caractérisé en ce que l'eau est remplacée par un fluide de refroidissement de protection, inerte, compatible, dont on peut séparer le polymère de polyuréthanne particulaire, et en ce que le fluide est présent en une quantité suffisante pour maintenir la température du mélange de mousse et de fluide de refroidissement de protection en dessous de 149°C.

## Patentansprüche

1. Teilchenenthaltendes Polymer hergestellt aus Polyuräthanschaum und bestehend aus unterbrochenen und miteinander verbundenen Strangteilen aus angrenzenden Zellen des Ausgangspolyuräthanschaums, wobei die genannten Strangteile in der Vergrößerung hauptsächlich dreischenklige Teilchen mit im allgemeinen ungleichen Schenkellängen sind, hakenähnliche Vorsprünge haben und Vertiefungen und Rillen aufweisen, die ungleichen Schenkellängen und Vorsprünge von der Zerstörung der Zellmembranen des Ausgangspolyuräthanschaums stammen, wobei in Strangteilen intakte Zellmembranen weitgehend fehlen, dadurch gekennzeichnet, daß die Polymerteilchen aus einem elastischen Polyuräthanschaum hergestellt werden und daß die Größe der dreischenkligen Teilchen sich zwischen 160 und 100 mkm in der gesamten maximalen Ausdehnung bewegt.

2. Teilchenenthaltendes Polymer nach Anspruch 1, dadurch gekennzeichnet, daß der elastische Polyuräthanschaum eine Dichte von höchstens 0,1 g/cm$^3$ hat.

3. Teilchenenthaltendes Polymer nach Anspruch 2, dadurch gekennzeichnet, daß der elastische Polyuräthanschaum eine Dichte von 0,017 bis 0,05 g/cm$^3$ hat.

4. Wäßriger Brei, der 1,0 bis 2,0 Gew-% teilchenenthaltendes Polymer nach einem der Anspruche 1 bis 3 enthält.

5. Verfahren zur Herstellung von teilchenenthaltendem Polymer nach Anspruch 1, dadurch gekennzeichnet, daß man Teile eines elastischen Polyuräthanschaums in einer ausreichenden Menge Wasser zerkleinert, um zu vermeiden, daß die erhaltene Mischung aus Polyuräthanschaum und Wasser eine Temperatur erreicht, die die Eigenschaften des Polyuräthanschaums oder des schließlich teilchenenthaltenden Polymers ungünstig beeinträchtigt, und die erhaltene Mischung aus zerkleinerten Polyuräthanteilchen und Wasser wiederholt über eine Kreisbahn schickt wobei man sie im Wasser wiederholt auf Aufpralloberflächen aufprallen läßt, die sich mit 4700 bis 8000 Umdrehungen pro Minute um die Achse der Kreisbahn drehen, wobei die Polyuräthanteilchen an den eckig geformten Rändern einer Vielzahl von Öffnungen zerkleinert werden, welche gitterartig in einer gewölbten Ebene angeordnet sind, und die im wesentlichen rund, mit einem Durchmesser von 0,102 bis 3, 175 mm, bis im wesentlichen rechteckig, mit einer Weite von 0,254 bis 3,175 und einer Länge von 3,81 bis 12,7 mm, sind, wodurch das genannte teilchenenthaltende Polymer hergestellt wird.

6. Verfahren nach Anspruch 5, dadurch gekennzeichnet, daß das genannte Wasser in ausreichender Menge vorhanden ist, um zu vermeiden, daß die Temperatur der Mischung aus Schaum und Wasser 95°C übersteigt.

7. Verfahren nach Anspruch 5, dadurch gekennzeichnet, daß das genannte Wasser durch eine inerte, verträgliche, schützende Kühlflüssigkeit ersetzt wird, von der das teilchenenthaltende Polyuräthanpolymer getrennt werden kann und wobei die genannte Flüssigkeit in einer ausreichenden Menge vorhanden ist, um die Temperatur der Mischung aus Schaum und schützender Kühlflüssigkeit unter 149°C zu halten.

## FIG. 1

FIG. 2

FIG. 3

FIG. 4

FIG. 5

FIG. 6

FIG. 7